# EUROPÄISCHE PATENTSCHRIFT

(11) **EP 0 775 168 B1**
(45) Veröffentlichungstag und Bekanntmachung des Hinweises auf die Patenterteilung: **01.04.1998**
(21) Anmeldenummer: 95928484.5
(22) Anmeldetag: 28.07.1995
(51) Int. Cl.: C08G 69/10, C08G 73/06, C11D 3/37, C02F 5/12

(54) **VERFAHREN ZUR HERSTELLUNG VON POLYKONDENSATEN DER ASPARAGINSÄURE UND VERWENDUNG DER POLYKONDENSATE**
METHOD FOR PRODUCING CONDENSATION POLYMERS OF ASPARTIC ACID AND USE OF THE CONDENSATION POLYMERS
PROCEDE DE FABRICATION DE POLYCONDENSATS DE L'ACIDE ASPARTIQUE ET UTILISATION DESDITS POLYCONDENSATS

(30) Priorität: 12.08.1994 DE 4428638
(43) Veröffentlichungstag der Anmeldung: 28.05.1997
(73) Patentinhaber: BASF AKTIENGESELLSCHAFT, 67056 Ludwigshafen (DE)
(72) Erfinder: KRONER, Matthias, D-67304 Eisenberg (DE); SCHORNICK, Gunnar, D-67271 Neuleiningen (DE)
(86) Internationale Anmeldenummer: EP9503004
(87) Internationale Veröffentlichungsnummer: WO9605242

(56) Entgegenhaltungen:
- WO-A-93/24661
- DD-A- 262 665
- DE-A- 4 023 563

## Beschreibung

Die Erfindung betrifft ein Verfahren zur Herstellung von Polykondensaten der Asparaginsäure durch Polykondensation von Asparaginsäure bei Temperaturen von 140 bis 300°C in Gegenwart von sauren Katalysatoren und die Verwendung der bei der Kondensation erhältlichen Reaktionsgemische als Zusatz zu phosphatfreien oder phosphatreduzierten Wasch- und Reinigungsmitteln.

Aus J. Med. Chem., Band 16, 893 (1973) ist die Polykondensation von Asparaginsäure in Gegenwart von Phosphorsäure bekannt. Das Molgewicht der Polykondensate ist vom Verhältnis von Asparaginsäure zu Phosphorsäure abhängig.

Aus der DD-A-262 665 ist die Herstellung von Polyaspartimid durch Polykondensation von Asparaginsäure in Gegenwart von vorzugsweise Polyphosphorsäure und gegebenenfalls anschließende weitere Kondensation des Polyaspartimid in fester Phase bei Temperaturen von 160 bis 200°C bekannt.

Nach dem aus der DE-A-4 023 463 bekannten Verfahren wird Asparaginsäure in Gegenwart von Phosphorsäure bei Drücken unterhalb von 1 bar in mindestens 2 Stufen polykondensiert. Als Kondensationsmittel verwendet man Phosphorsäure, Phosphorpentoxid oder Polyphosphorsäure. In der ersten Stufe des Verfahrens werden Gemische aus Asparaginsäure und Kondensationsmittel bei Temperaturen von 100 bis 250°C zu Polysuccinimiden mit Molekulargewichten von etwa 10.000 bis 100.000 polykondensiert. Das dabei entstehende kompakte, harte Reaktionsgemisch wird anschließend mechanisch zerkleinert und in einer zweiten Polykondensationsstufe unter den Temperatur- und Druckbedingungen der ersten Stufe nachkondensiert.

Die oben beschriebenen Verfahren haben den Nachteil, daß man die als Katalysator verwendete Phosphorsäure oder Polyphosphorsäure aus dem Polykondensat auswaschen muß. Eine solche Maßnahme ist in der Technik mit einem erheblichen Aufwand verbunden. Außerdem muß die aus den Polykondensaten extrahierte Phosphorsäure wieder aufkonzentriert werden, um erneut bei der Polykondensation als Katalysator eingesetzt werden zu können.

Aus der WO-A-93/24661 ist unter anderem auch die Herstellung von Polyasparaginsäure und Cokondensaten der Asparaginsäure in Gegenwart von anorganischen Säuren bekannt. Außer den bereits oben erwähnten Säuren des Phosphors werden Halogenwasserstoffsäuren, Phosphorsäuren, in denen der Phosphor eine niedrigere Oxidationsstufe als plus 5 aufweist, Schwefelsäure, Dischwefelsäure, Schwefeltrioxid, Natrium- und Kaliumhydrogensulfat genannt.

Der vorliegenden Erfindung liegt die Aufgabe zugrunde, ein Verfahren zur Herstellung von Polykondensaten der Asparaginsäure zur Verfügung zu stellen, wobei man, verglichen mit dem Stand der Technik, Polykondensate mit einem höheren Molgewicht erhält.

Die Aufgabe wird erfindungsgemäß gelöst mit einem Verfahren zur Herstellung von Polykondensaten der Asparaginsäure durch Polykondensation von Asparaginsäure bei Temperaturen von 140 bis 300°C in Gegenwart von sauren Katalysatoren, wenn man als Katalysator partiell mit Ammoniak und/oder Aminen neutralisierte Schwefelsäure einsetzt.

Die Asparaginsäure, die nach dem erfindungsgemäßen Verfahren polykondensiert wird, kann als L-, D,L- oder D-Asparaginsäure vorliegen. Die Asparaginsäure kann in jeder beliebigen Kristallgröße polykondensiert werden. Der Durchmesser von feinteiliger Asparaginsäure, die der Polykondensation unterworfen wird, beträgt beispielsweise 0,01 bis 5 mm.

Die Polykondensation der Asparaginsäure wird bei Temperaturen von 140 bis 300, vorzugsweise 150 bis 240°C in Gegenwart von partiell mit Ammoniak und/oder Aminen neutralisierter Schwefelsäure durchgeführt. In den sauren Ammoniumhydrogensulfaten beträgt das Molverhältnis von Schwefelsäure : Ammoniak und/oder Aminen beispielsweise 1:0,5 bis 1:1,5. Als saurer Katalysator wird vorzugsweise eine partiell neutralisierte Schwefelsäure eingesetzt, die mit 0,8 bis 1,2 mol Ammoniak und/oder Amin pro mol Schwefelsäure neutralisiert ist. Besonders bevorzugte Säurekatalysatoren haben ein Molverhältnis von Schwefelsäure : Ammoniak und/oder Aminen von 1:1. Zu den besonders bevorzugten Katalysatoren gehören Ammoniumhydrogensulfat, Trimethylammoniumhydrogensulfat und Triethylammoniumhydrogensulfat. Sämtliche oben beschriebenen partiell neutralisierten Schwefelsäuren werden im Folgenden der Einfachheit halber als Ammoniumhydrogensulfat bezeichnet.

Zur Herstellung der sauren Katalysatoren in Form von Ammoniumhydrogensulfaten kann man Schwefelsäure in Form von verdünnter oder konzentrierter Schwefelsäure einsetzen. Als Verdünnungsmittel für Schwefelsäure können alle mit Schwefelsäure mischbaren Flüssigkeiten verwendet werden. Vorzugsweise kommt Wasser in Betracht. Daneben können auch organische Verdünnungsmittel wie Aceton, Ethylmethylketon, Methanol, Ethanol, Isopropanol, Butanol, Ethylenglykol, Diethylenglykol, Triethylenglykol, Polyethylenglykole, Polypropylenglykole, Polybutylenglykole oder Polytetrahydrofurane eingesetzt werden.

Als Base für die partielle Neutralisation der Schwefelsäure eignen sich Ammoniak und Amine. Als Amine können sowohl primäre, sekundäre als auch tertiäre Amine eingesetzt werden.

Beispiele für primäre ein- und mehrwertige Amine sind C₁- bis C₃₀-Alkylamine wie Methylamin, Ethylamin, Propylamin, n-Butylamin, sec.-Butylamin, tert.-Butylamin, Pentylamine, Hexylamin, Cyclohexylamin, Octylamin, 2-Ethylhexylamin, Tridecylamin, Palmitylamin, Stearylamin, Oleylamin sowie 1,2-Ethylendiamin, 1,2-Propylendiamin, 1,3-Diaminopropan, 1,4-Diaminobutan, 1,6-Diaminohexan, 1,8-Diaminooctan, Benzylamin, 2-Phenylethylamin, Neopentandiamin, Diethylentriamin, Triethylentetramin, Tetraethylenpentamin, Polyethylenimin und Polyvinylamin.

Beispiele für sekundäre Amine sind Dimethylamin, Diethylamin, Di-n-propylamin, Diisopropylamin, Dibutylamin, Diisobutylamin, Di-sec.-butylamin, Di-2-ethylhexylamin, N-Methylcyclohexylamin, N-Ethylcyclohexylamin, Dicyclohexylamin, Ditridecylamin, Morpholin, N-Methyl-N-hexylamin, N-Methyl-N-butylamin, N-Ethyl-N-butylamin, Piperidin und Piperazin.

Es können auch mehrwertige Amine eingesetzt werden, die sowohl primäre Aminogruppen als auch sekundäre oder tertiäre Aminogruppen enthalten. Beispiele für solche Polyalkylenpolyamine sind Diethylentriamin, Triethylentetramin, Tetraethylenpentamin, Polyethylenimine, 1-Diethylamino-4-aminopentan, 2-Diethylaminoethylamin, Dimethylaminopropylamin, N-methyl-1-methylaminopropan, 1-Diethylamino-4-aminopentan, 3-(2-Aminoethyl)aminopropylamin, Dipropylentriamin und Bis(3-aminopropyl)ethylendiamin.

Tertiäre Amine sind beispielsweise Trimethylamin, Triethylamin, Tripropylamin, Tributylamin, Tri-2-ethylhexylamin, Dimethylcyclohexylamin, N,N-Dimethylethylamin, N,N-Dimethylisopropylamin, N-Methylmorpholin, N-Ethylmorpholin, N-Laurylmorpholin, Tetramethylethylendiamin, Tetramethyl-1,3-propandiamin, Tetramethyl-1,6-hexandiamin, Pentamethyldiethylentriamin, Hexamethyltriethylentetramin, Heptamethyltetraethylenpentamin, Dimethyl-C₈/C₁₂-amin, Dimethyl-C₁₂/₁₄-amin, N-Methylpiperidin und Dimethylpiperazin.

Die Amine können auch heterocyclisch oder aromatisch sein. Beispiele sind Pyridin, Collidin, Lutidin, Anilin, N-Methylanilin, N,N-Dimethylanilin, Imidazol, N-Methylimidazol und Michlers Base (Tetramethyl-4,4'-diaminodiphenylmethan).

Die Amine können auch noch andere funktionelle Gruppen tragen, beispielsweise Carbonsäuregruppen, Estergruppen, Alkoholgruppen oder Ethergruppen. Beispiele für solche Amine sind Alkanolamine wie Ethanolamin, Diethanolamin, Propanolamin, Dipropanolamin, Tripropanolamin, Isopropanolamin, Diisopropanolamin, Triisopropanolamin, N,N-Dimethylethanolamin, N,N-Diethylethanolamin, N,N-Diisopropylethanolamin, 1,2-Butanolamine, Dibutanolamin, Tributanolamin, N-Methyldiisopropanolamin und 3-Dimethylaminopropanol. Die OH-Gruppen der Alkanolamine können verethert oder verestert sein. Beispiele für Ether und Estergruppen enthaltende Amine sind 2-Methoxyethylamin, 2-Ethoxyethylamin, 2-Acetoxyethylamin, 3-Methoxypropylamin, 3-Ethoxypropylamin, 3-(2-Ethylhexoxy)propylamin, 3-(2-Methoxyethoxy)propylamin, Di-2-methoxyethylamin, Di-2-ethoxyethylamin, Di-2-acetoxyethylamin, Tri-2-methoxyethylamin, Tri-2-acetoxyethylamin, Tetramethyl-2,2'-diaminodiethylether, 4,9-Dioxadodecan-1,12-diamin und 4,7,10-Trioxatridecan-1,13-diamin.

Beispiele für Carbonsäuregruppen enthaltende Amine sind N,N-Dimethylaminosäuren, N,N-Dimethylglycin, Nitrilotriessigsäure und Ethylendiamintetraessigsäure.

Amine, die mehrere basische Stickstoffatome enthalten, werden, bezogen auf Schwefelsäure, in einer solchen Menge eingesetzt, daß die entstehenden Ammoniumsalze beim Lösen in Wasser einen pH-Wert von höchstens 7, vorzugsweise unterhalb von 5 besitzen.

Als saure Katalysatoren werden bevorzugt Salze verwendet, die ein Molverhältnis von Schwefelsäure : Ammoniak und/oder Aminen von 1:1 haben. Besonders bevorzugt als saurer Katalysator sind Salze, die durch partielle Neutralisation von Schwefelsäure mit Ammoniak, Trimethylamin oder Triethylamin erhältlich sind, wobei insbesondere Ammoniumhydrogensulfat (Molverhältnis Schwefelsäure : Ammoniak, Trimethylamin bzw. Triethylamin von 1:1) bevorzugt als saurer Katalysator eingesetzt wird.

Die Polykondensation der Asparaginsäure kann als Festphasenkondensation oder als Lösungspolykondensation durchgeführt werden. Verwendet man beispielsweise bei der Polykondensation von 1 mol Asparaginsäure bis zu 0,7 mol Ammoniumhydrogensulfat, so verläuft die Reaktion in fester Phase und es entstehen pulverförmige Reaktionsmischungen. Setzt man jedoch pro mol Asparaginsäure mehr als 0,7 mol Ammoniumhydrogensulfat bei der Polykondensation ein, so wirken die Ammoniumhydrogensulfate als Lösemittel für Asparaginsäure und Polyasparaginsäureimid, so daß die Polykondensation in Form einer Schmelzpolykondensation verläuft. Die Polykondensation kann gegebenenfalls auch in einem Lösemittel vorgenommen werden, z.B. in Polyethylenglykol eines Molgewichts von 150 bis 20.000, bevorzugt 300 bis 10.000.

Die als saurer Katalysator erfindungsgemäß zu verwendende partiell mit Ammoniak und/oder Aminen neutralisierte Schwefelsäure kann beispielsweise durch Zusammenbringen von Ammoniak und/oder Aminen und Schwefelsäure in Gegenwart oder in Abwesenheit von Asparaginsäure erzeugt werden. Sofern die Ammoniumhydrogensulfate nicht direkt zur Verfügung stehen, kann man beispielsweise eine 10- bis 50 %ige wäßrige Schwefelsäure mit einer wasserfreien oder wäßrigen Lösung eines Amins teilneutralisieren. Man kann auch Ammoniak bzw. gasförmige Amine in die wäßrige Lösung von Schwefelsäure einleiten. In den so erhältlichen Ammoniumhydrogensulfatlösungen kann man feinteilige Asparaginsäure aufschlämmen und das Wasser abdestillieren. Eine andere Möglichkeit besteht darin, eine wäßrige Lösung eines Ammoniumhydrogensulfats auf feinteilige Asparaginsäure aufzusprühen.

Eine andere Variante, um die Polykondensation in Gegenwart von partiell mit Ammoniak und/oder Aminen neutralisierter Schwefelsäure durchzuführen, besteht darin, daß man Asparaginsäure zuerst mit Schwefelsäure imprägniert und anschließend darauf Ammoniak und/oder Amine einwirken läßt. Bei einer anderen Variante zur Katalysatorherstellung imprägniert man Asparaginsäure zuerst mit Ammoniak und/oder Aminen und fügt anschließend Schwefelsäure zu.

Ammoniumhydrogensulfate von organischen Aminen besitzen im allgemeinen niedrige Schmelzpunkte. Beispielsweise schmilzt Trimethylammoniumhydrogensulfat bei 70 bis 75°C. Man kann deshalb eine wasserarme oder wasserfreie Schmelze aus organischen Ammoniumhydrogensulfaten auf Asparaginsäurekristalle aufdüsen.

Die Herstellung des sauren Katalysators bzw. das Vermischen der Asparaginsäure mit den Ammoniumhydrogensulfaten kann beispielsweise bei Temperaturen von 0 bis 200°C erfolgen. Gibt man eine Lösung von Ammoniumhydrogensulfat in Wasser zu einer auf Temperaturen oberhalb von 140°C, bevorzugt zwischen 170 und 200°C, erhitzten Asparaginsäure, so wird das Wasser abdestilliert und der saure Katalysator auf der Oberfläche der Asparaginsäurekristalle niedergeschlagen. Gleichzeitig mit dem Vermischen von Asparaginsäure und Katalysator sowie dem Abdestillieren des Wassers kann die eigentliche Polykondensation der Asparaginsäure bereits eintreten. Um während der Polykondensation Verbackungen zu vermeiden, kann man die Polykondensation in Gegenwart von nichtionischen, anionischen, kationischen Tensiden, langkettigen Carbonsäuren oder Mischungen aus miteinander verträglichen nichtionischen und kationischen oder nichtionischen und anionischen Tensiden durchführen. Die üblicherweise eingesetzten Mengen an Tensiden betragen 1 bis 20 Gew.-%, bezogen auf die Asparaginsäure.

Asparaginsäure, die mit Ammoniumhydrogensulfaten imprägniert ist, beginnt bereits bei Temperaturen oberhalb von 140°C unter Bildung von Wasser zu polykondensieren. Die Reaktionsmischung durchläuft dabei kurzzeitig eine klebrige Phase, bei der die einzelnen Asparaginsäurekristalle aneinanderkleben. Dies geschieht, wenn eine Polykondensationstemperatur von ca. 150 bis 160°C erreicht ist und ist an einer starken Leistungsaufnahme am Rührer erkennbar. Nach einer Polykondensationszeit von 15 bis 20 Minuten bei 140 bis 160°C wird die Leistungsaufnahme geringer und das Reaktionsgemisch wird wieder pulvrig, ist rieselfähig und völlig klebfrei. Nach 30 Minuten ist eine wieder gut rührbare und rieselfähige Reaktionsmischung entstanden. Die Polykondensation ist aber zu diesem Zeitpunkt noch nicht vollständig abgeschlossen. Durch Abbrechen der Polykondensation auf dieser Stufe lassen sich verschiedene Polykondensationsgrade einstellen. Die Fortführung der Polykondensation kann dann in pulverförmigem Zustand bei höheren Temperaturen durchgeführt werden.

Das Molverhältnis von Asparaginsäure zu partiell neutralisierter Schwefelsäure beträgt beispielsweise 1:0,01 bis 1:3 und liegt vorzugsweise in dem Bereich von 1:0,05 bis 1:1,5. Die Polykondensation der Asparaginsäure wird vorzugsweise soweit betrieben, daß auf 1 mol Asparaginsäure 1 bis 2 mol Kondensationswasser aus dem polymerisierenden Gemisch abdestilliert wird. Die Polykondensation kann jedoch auch abgebrochen werden, wenn weniger als 1 mol Kondensationswasser gebildet worden ist. In solchen Fällen können die Polykondensate noch restliche Anteile an freier Asparaginsäure enthalten. Wenn man beispielsweise pro mol Asparaginsäure 0,7 bis 1,2 mol Kondensationswasser aus dem Reaktionsgemisch abdestilliert, so erhält man überwiegend Kondensate, die Polyasparaginsäure enthalten. Wird dagegen die Polykondensation so weit fortgesetzt, daß 1,2 bis 1,7 mol Wasser pro mol eingesetzter Asparaginsäure gebildet werden, so enthalten die Polykondensate neben Polyasparaginsäure auch Polyasparaginsäureimideinheiten. Werden mehr als 1,7 bis zu 2 mol Wasser pro mol Asparaginsäure bei der Polykondensation aus dem Reaktionsgemisch abdestilliert, so bestehen die Polykondensate überwiegend aus Polyasparaginsäureimiden.

Die Temperaturen, bei denen die Polykondensation im wesentlichen erfolgt, betragen 140 bis 300, vorzugsweise 150 bis 250°C. Der besonders bevorzugte Temperaturbereich für die Polykondensation von Asparaginsäure ist 160 bis 230°C. Je höher die Temperatur gewählt wird, desto schneller verläuft die Reaktion und damit kürzer werden die Verweilzeiten.

Gegenüber dem bekannten Einsatz von Natrium- oder Kaliumhydrogensulfat zeichnen sich Ammoniumhydrogensulfate dadurch aus, daß sie einen niedrigen Schmelzpunkt besitzen. Ammoniumhydrogensulfat schmilzt bei 147°C und Triethylammoniumhydrogensulfat bei 70 bis 75°C. Unter den Polykondensationsbedingungen liegen die Ammoniumhydrogensulfate in flüssiger Form vor, so daß aufgrund der Löslichkeit der Asparaginsäure in den Ammoniumhydrogensulfaten die Polykondensation in homogener Schmelze durchgeführt werden kann. Werden stöchiometrische Mengen Ammoniumhydrogensulfat gewählt, so kann die Polykondensation von Asparaginsäure in Form einer Schmelzkondensation durchgeführt werden. Die Verarbeitung solcher homogener Reaktionsschmelzen erfolgt in dem für die Polykondensation üblichen Apparaten wie Dünnschichtreaktoren, Extrudern, Rührkesseln oder beheizten Förderbändern.

Geeignete Apparate für die Imprägnierung der Asparaginsäure mit den Ammoniumhydrogensulfaten sind beispielsweise Wirbelbettreaktoren, Schaufeltrockner, Kneter und Sprüheinrichtungen. Falls bei der Polykondensation eine klebrige Phase auftritt, verwendet man Apparate, die über eine starke mechanische Einrichtung zum Vermischen verfügen, beispielsweise Kneter, Schaufeltrockner, Kugelmühlen oder Extruder. Wenn die Polykondensation eine klebrige Phase durchlaufen hat, erfolgt die Weiterkondensation beispielsweise zweckmäßig in Apparaten, die für die Verarbeitung von leicht beweglichen Pulvern üblich sind, z.B. heizbaren Förderbändern, Drehrohröfen, Fallturm oder Trommeln.

Nach Beendigung der Polykondensation können die als saurer Katalysator verwendeten Ammoniumhydrogensulfate im Polykondensat verbleiben oder - falls erforderlich - auch durch Extraktion mit Wasser aus dem Reaktionsgemisch entfernt werden. Das Entfernen der wasserlöslichen Ammoniumhydrogensulfate im Anschluß an die Polykondensation kann beispielsweise so durchgeführt werden, daß man das pulverförmige Polykondensat in einem Extraktionsturm mit Wasser im Gegenstrom behandelt. Die Extraktion kann auch dadurch erfolgen, daß das Polykondensat auf einem Filtrationsband mit Wasser besprüht wird. Die Restgehalte an Ammoniumhydrogensulfaten im Polykondensat werden durch den Aufwand bestimmt, der bei der Extraktion getrieben wird. Die bei der Polykondensation anfallenden Polykondensate können direkt oder nach Entfernen von Ammoniumhydrogensulfaten als Zusatz von phosphatfreien oder phosphatreduzierten Wasch- und Reinigungsmitteln verwendet werden. Unter phosphatreduzierten Wasch- und Reinigungsmitteln sollen solche Formulierungen verstanden werden, deren Phosphatgehalt, berechnet auf Trinatriumphosphat, unterhalb von 25 Gew.-% beträgt.

Die bei der Polykondensation anfallenden Mischungen können jedoch auch hydrolysiert werden. Die Verwendung von hydrolysierten Polykondensaten der Asparaginsäure ist bevorzugt. Die Hydrolyse kann mit Hilfe von Alkalimetallbasen wie Natriumhydroxid, Kaliumhydroxid, Kaliumcarbonat oder Soda oder mit Erdalkalimetallbasen wie Magnesiumoxid, Magnesiumhydroxid, Kalziumoxid und Kalziumhydroxid durchgeführt werden. Die Polykondensate können dabei teilweise oder vollständig in die Alkalimetall- und/oder Erdalkalimetallsalze überführt werden.

Eine bevorzugte Ausführungsform der Hydrolyse der Polykondensate der Asparaginsäure besteht darin, daß man gleichzeitig die Aminkomponente aus den Ammoniumhydrogensulfaten entfernt, Hierzu wird die Reaktionsmischung beispielsweise in Wasser aufgeschlämmt und durch Zusatz von beispielsweise Natronlauge hydrolysiert, wobei zur Neutralisation des Ammoniumhydrogensulfats Natronlauge verbraucht wird. Die Menge an Natronlauge richtet sich nach der in der Reaktionsmischung enthaltenen Menge an Ammoniumhydrogensulfat, wobei pro mol Ammoniumhydrogensulfat bis zu 2 mol Natriumhydroxid benötigt werden.

Die Hydrolyse mit Hilfe von Natronlauge erfolgt bei Temperaturen von 0 bis 140°C. Falls bei Temperaturen oberhalb von 100°C hydrolysiert wird, so arbeitet man in druckdicht verschlossenen Apparaturen. Die Hydrolyse kann bevorzugt so durchgeführt werden, daß das dabei freigesetzte Amin bzw. der freigesetzte Ammoniak aus der Reaktionsmischung abdestilliert wird. Bei der Hydrolyse kann beispielsweise unter Normaldruck gearbeitet werden, wenn man ein niedrig siedendes Amin oder niedrig siedenden Ammoniak aus dem zu hydrolysierenden Gemisch entfernen will. Die Amine können jedoch auch unter vermindertem Druck aus dem Reaktionsgemisch abdestilliert werden. Das bei der Hydrolyse freigesetzte Amin bzw. der Ammoniak kann auch mit Hilfe eines Inertgasstroms oder mit Hilfe von Wasserdampf aus dem Reaktionsgemisch ausgetrieben werden. Als Destillationsrückstand erhält man bei Einsatz von Natronlauge beispielsweise die Natriumsalzlösung von Polyasparaginsäure, die praktisch frei von Ammoniak oder Amin ist.

Um die Amine vollständig zu entfernen, wird vorzugsweise ein pH-Wert eingestellt, bei dem das Amin zu mindestens 50 % in nicht protonierter Form vorliegt. Der Mindest-pH-Wert dafür ergibt sich aus der Basenstärke der Amine und liegt vorzugsweise über dem Wert des pKa-Wertes. So betragen die pH-Werte von Ammoniak beispielsweise mehr als 9,2, von Triethylamin mehr als 10, von Trimethylamin mehr als 9,8 und von Pyridin mehr als 5,2.

Restliche Mengen von Aminen in den wäßrigen Lösungen der Salze von Polyasparaginsäure können auch mit Hilfe eines Oxidationsmittels entfernt werden. Als Oxidationsmittel bieten sich Wasserstoffperoxid, Ozon, Natriumhypochlorit, Sauerstoff, organische Peroxide oder Salpetersäure an. Dabei bilden sich aus den Aminen die entsprechenden Amin-N-Oxide, die geruchsneutral sind und in Waschmittelflotten als Bleichmittel wirken. Der Sulfatanteil in der Polyasparaginsäuresalzlösung stört bei der vorgesehenen Verwendung nicht. Solche Reaktionsgemische werden ebenfalls als Zusatz zu phosphatfreien oder phosphatreduzierten Wasch- und Reinigungsmitteln eingesetzt.

Ein besonders wirtschaftliches Verfahren zur Herstellung von Asparaginsäure besteht in der enzymatisch katalysierten Addition von Ammoniak an Fumarsäure. Die dabei zunächst entstehende Ammoniumaspartatlösung wird mit der benötigten Menge an Schwefelsäure versetzt, so daß beispielsweise das Molverhältnis von Schwefelsäure zu Ammoniak 1:0,5 bis 1:1,5 beträgt und dann zur Trockne eingedampft und polykondensiert. Das bei der Polykondensation erhaltene Reaktionsgemisch wird anschließend durch Zugabe von Natronlauge hydrolysiert und Ammoniak aus der Poly-Natriumaspartatlösung abgedampft, wobei Ammoniak in den Prozeß zurückgeführt werden kann.

Die durch Hydrolyse nach dem erfindungsgemäßen Verfahren erhältlichen Polyasparaginsäuren haben K-Werte (bestimmt nach Fikentscher in 1 gew.-%iger wäßriger Lösung bei pH 7 und 25°C am Natriumsalz der Polymeren) von 10 bis 150. Die Molgewichte M_{w} der erhaltenen Polyasparaginsäuren liegen zwischen 1.000 und 200.000. Die mit Ammoniumhydrogensulfaten als Katalysator erhältlichen Polyasparaginsäuren haben höhere Molgewichte als Polyasparaginsäuren, die mit Natrium- oder Kaliumhydrogensulfat als Katalysator erhältlich sind. Die nach dem erfindungsgemäßen Verfahren erhältlichen Polyasparaginsäuren sind nach dem Zahn-Wellens-Test zu mehr als 75 % biologisch abbaubar. Der biologische Abbau ist erkennbar an der Abnahme des gelösten organischen Kohlenstoffs in der Untersuchuhgslösung.

Die nach dem erfindungsgemäßen Verfahren erhältlichen Reaktionsgemische oder die mit Alkalimetall- oder Erdalkalimetallbasen neutralisierten Reaktionsgemische werden als Zusatz zu phosphatfreien oder phosphatreduzierten Wasch- und Reinigungsmitteln verwendet. Die Einsatzmengen an Polykondensaten in den Waschmittelformulierungen betragen beispielsweise 1 bis 40, vorzugsweise 2 bis 30 Gew.-%. Die Wasch- und Reinigungsmittel enthalten als weiteren Bestandteil Tenside in einer Menge von 1 bis 50 Gew.-% und gegebenenfalls Builder, z.B. Copolymerisate aus Maleinsäure und Acrylsäure mit Molgewichten von 40.000 bis 150.000 oder Zeolithe. Die Zusammensetzung von Wasch- und Reinigungsmittelformulierungen variiert sehr stark, so daß hierzu keine genauen Angaben gemacht werden können. Die Waschmittel können gegebenenfalls noch weitere Stoffe wie Bleichmittel, Komplexbildner, Trübungsmittel, optische Aufheller, Enzyme, Parfümöle, Farbstoffübertragungsinhibitoren und/oder Vergrauungsinhibitoren enthalten.

Sofern in den Beispielen nichts anderes angegeben ist, bedeuten die Angaben in Prozent Gewichtsprozent. Die K-Werte wurden nach H. Fikentscher, Cellulose-Chemie, Band 13, 58 bis 64 und 71 bis 74 (1932) in einprozentiger wäßriger Lösung bei 25°C und pH 7 am Natriumsalz der Polyasparaginsäuren bestimmt.

### Beispiel 1

In einem 2 Liter fassenden Reaktor, der mit einem Ankerrührer und einer Destillationsbrücke versehen ist, werden 200 g Wasser vorgelegt und mit 9,8 g (0,1 mol) Schwefelsäure und danach mit 10,1 g (0,1 mol) Triethylamin versetzt. In die Lösung trägt man anschließend 133 g (1 mol) Asparaginsäure (Teilchengröße 0,1 bis 2 mm) unter Rühren ein. Die Reaktionsmischung wird bei einer Heizbadtemperatur von 120°C im Vakuum der Wasserstrahlpumpe zur Trockne eingedampft und der Rückstand anschließend bei einer Heizbadtemperatur von 180°C bei 16 mbar polykondensiert. Dabei schmilzt die Reaktionsmasse und verfestigt sich anschließend. Die verfestigte Reaktionsmasse wird mechanisch zerkleinert (Korngröße ca. 1 bis 5 mm Durchmesser) und 6 Stunden bei einer Temperatur von 180°C getempert. Nach dem Abkühlen des Pulvers wird das Polykondensat mit 1 Liter Wasser versetzt und die Aufschlämmung 2 Stunden bei 0°C gerührt. Das Polykondensat wird dann abfiltriert, zweimal mit 2 Liter Wasser gewaschen und anschließend getrocknet und gewogen. Die Ausbeute an farblosem Polyasparaginsäureimid beträgt 81 g (83,5 % der Theorie). Der K-Wert des Polykondensats in der Natriumform beträgt 30,9.

### Beispiel 2

In der im Beispiel 1 beschriebenen Apparatur werden 200 g Wasser vorgelegt und anschließend mit 29,4 g (0,3 mol) Schwefelsäure und 30,3 g (0,3 mol) Triethylamin versetzt. In diese Lösung trägt man anschließend 133 g (1 mol) Asparaginsäure ein, destilliert das Wasser bis zur Trockne ab und polykondensiert das Reaktionsgemisch wie in Beispiel 1 beschrieben. Man erhält einen unlöslichen Rückstand von 99,8 g. Der K-Wert des Natriumsalzes der Polyasparaginsäure beträgt 42,5.

### Beispiel 3

In der im Beispiel 1 beschriebenen Apparatur werden 200 g Wasser mit 9,8 g (0,1 mol) Schwefelsäure und 6,8 g (0,1 mol) 25 %iger wäßriger Ammoniaklösung versetzt und 133 g (1 mol) Asparaginsäure hinzugegeben. Das Wasser wird entfernt und der Rückstand wie in Beispiel 1 beschrieben polymerisiert. Man erhält 80,5 g (83 % der Theorie) farbloses Polyasparaginsäureimid. Der K-Wert des Natriumsalzes der aus dem Polykondensat erhältlichen Polyasparaginsäure beträgt 22,5.

### Beispiel 4

In der im Beispiel 1 angegebenen Apparatur werden 200 g Wasser, 29,4 g (0,3 mol) Schwefelsäure und 20,4 g (0,3 mol) 25 %ige wäßrige Ammoniaklösung gemischt und mit 133 g (1 mol) Asparaginsäure versetzt. Nach dem Abdestillieren des Wassers wird der Rückstand wie im Beispiel 1 abgegeben polykondensiert. Die Ausbeute beträgt 95,2 g (98,1 % der Theorie) an Polysuccinimid. Der K-Wert des daraus durch Hydrolyse mit Natronlauge erhältlichen Natriumpolyaspartats beträgt 27,3.

### Beispiel 5

Beispiel 2 wird mit der Ausnahme wiederholt, daß nach der 6stündigen Polykondensation die gesamte Reaktionsmasse in Wasser aufgeschlämmt und mit Natronlauge unter Kontrolle des pH-Wertes versetzt wird, bis sich das Polykondensat gelöst hat. Neben der Lösung des Natriumsalzes der Polyasparaginsäure hat sich eine spezifisch leichtere Schicht aus Triethylamin gebildet. Die wäßrige Phase wird zweimal mit 200 ml Essigester extrahiert. Restliche Anteile an flüchtigen organischen Bestandteilen können durch Ausblasen mittels Luft oder Stickstoff aus der wäßrigen Lösung entfernt werden.

### Beispiel 6

Beispiel 2 wird mit der Ausnahme wiederholt, daß man die Reaktionsmasse nach der 6stündigen Polykondensation in Wasser aufschlämmt und so lange mit Natronlauge unter Kontrolle des pH-Werts der Lösung versetzt, bis das Polykondensat gelöst ist. Die organische Phase wird im Wasserstrahlvakuum am Rotationsverdampfer bei einer Badtemperatur von 50°C abdestilliert. Man erhält eine praktisch aminfreie wäßrige Lösung von Natriumpolyaspartat.

### Beispiel 7

In einem 1 Liter fassenden Rundkolben werden 392 g 25 %ige Schwefelsäure (1 mol) mit 131,3 g (1 mol) 45 %iger wäßriger Trimethylaminlösung in kleinen Portionen versetzt, so daß kein Amin entweicht. Man gibt anschließend 133 g (1 mol) Asparaginsäure zu und dampft das Reaktionsgemisch im Wasserstrahlvakuum am Rotationsverdampfer bei 70°C zur Trockne ein. Danach wird die Temperatur auf 170°C erhöht. Sobald diese Temperatur erreicht ist, löst sich die Asparaginsäure zu einer klaren Schmelze auf und die Polykondensation beginnt. Man polykondensiert 1 Stunde bei 170°C, kühlt anschließend ab und versetzt das Reaktionsgemisch mit 600 ml Wasser. Nach der Extraktion der Schmelze mit Wasser wird das Polykondensat getrocknet. Die Ausbeute an Polysuccinimid beträgt 95,1 g (98 % d.Th.). Der K-Wert des Natriumsalzes des hydrolysierten Polysuccinimid beträgt 71,2 (M_{w} = 50.000).

### Beispiel 8

Wie im Beispiel 7 beschrieben, werden 392 g 25 %ige Schwefelsäure mit 131,3 g 45 %iger Trimethylaminlösung versetzt und im Vakuum der Wasserstrahlpumpe bei 70°C soweit eingeengt, daß kein Wasser mehr entweicht. Dann fügt man 133 g Asparaginsäure zu und erhitzt das Reaktionsgemisch auf eine Temperatur von 170°C. Man erhält eine homogene Reaktionsmischung, die eine Stunde bei 170°C polykondensiert und wie im Beispiel 7 aufgearbeitet wird. Der K-Wert des durch Hydrolyse aus dem Polykondensat erhältlichen Natriumpolyaspartats beträgt 73,9.

### Vergleichsbeispiele 1 bis 6

In der in Beispiel 1 angegebenen Apparatur werden die in Tabelle 1 angegebenen Mengen an Schwefelsäure und gegebenenfalls Natriumhydroxid bzw. Kaliumhydroxid zugegeben. Anschließend wird die Polykondensation nach der im Beispiel 1 angegebenen Vorschrift durchgeführt und das Reaktionsgemisch jeweils entsprechend aufgearbeitet. Die dabei erhaltenen Ergebnisse sind in Tabelle 1 angegeben.

| Vergleichsbeispiel | Wasser | Schwefelsäure | Alkalihydroxid 50 %ige Lösung | Ausbeute | K-Wert |
|---|---|---|---|---|---|
| 1 | 200 g | 9,8 g (0,1 mol) | - | 74,7 g 77 % d.Th. | 20,7 |
| 2 | 200 g | 29,4 g (0,3 mol) | - | 88,9 g 91,7 % d.Th. | 20,5 |
| 3 | 200 g | 9,8 g (0,1 mol) | 11,4 g (KOH) (0,1 mol) | 73,6 g 76 % d.Th. | 17,5 |
| 4 | 200 g | 29,4 g (0,3 mol) | 34,2 g (KOH) (0,3 mol) | 94,6 g 97,6 % d.Th. | 25,9 |
| 5 | 200 g | 9,8 g (0,1 mol) | 8,0 g (NaOH) (0,1 mol) | 72,7 g 75 % d.Th. | 18,1 |
| 6 | 200 g | 29,4 g (0,3 mol) | 24,0 g (NaOH) (0,3 mol) | 87,3 g 90 % d.Th. | 24,3 |

Vergleicht man die Ergebnisse der Vergleichsbeispiele mit den Ergebnissen der Beispiele 1 bis 4, so wird deutlich, daß bei Verwendung von 10 mol-% und besonders bei einem Einsatz von 30 mol-% an Ammoniumhydrogensulfaten die Molgewichte der Polykondensate gegenüber den Vergleichsbeispielen mit gleicher Katalysatormenge erhöht sind. Sehr hohe Molekulargewichte und spektroskopisch sehr reine Polysuccinimide erhält man mit stöchiometrischen Mengen Ammoniumhydrogensulfaten.

### Vergleichsbeispiel 7

In einem 1 Liter fassenden Rundkolben werden 133 g Asparaginsäure unter eine Stickstoffstrom 6 Stunden auf eine Temperatur von 180°C erhitzt. Nach dem Abkühlen wird das Reaktionsprodukt ohne weiter Reinigung in Wasser aufgeschlämmt und durch Zugabe von Natronlauge bis zu einem pH-Wert von 9 bis 10 hydrolysiert. Der K-Wert des so erhältlichen Natriumpolyaspartats beträgt 9,6.

Im Gegensatz zur Polymerisation in Gegenwart von erfindungsgemäß zu verwendenden Ammoniumsalzen der Schwefelsäure findet unter vergleichbaren Reaktionsbedingungen (Temperatur, Zeit) ohne Katalysator nahezu keine Polykondensation der Asparaginsäure statt.

### Beispiel 9

In einem 2 Liter fassenden Reaktor wird eine Ammoniumaspartatlösung hergestellt, indem 133,1 g (1 mol) Asparaginsäure in 500 g Wasser unter Rühren aufgeschlämmt und mit 68 g (1 mol) 25 %iger wäßriger Ammoniaklösung versetzt werden. Die resultierende klare Lösung entspricht der Zusammensetzung einer Ammoniumaspartatlösung, wie sie bei der enzymatischen Addition von Ammoniak an Fumarsäure nach Entfernen (Strippen) von überschüssigem Ammoniak anfällt. Die Lösung wird mit 98 g konzentrierter Schwefelsäure innerhalb von 30 Minuten versetzt, wobei die Asparaginsäure ausfällt. Die gesamte Aufschlämmung wird im Wasserstrahlvakuum bei 130°C unter Rühren zur Trockne eingedampft und die als Rückstand verbleibende dicke Schmelze unter Bildung eines Schaumes bei 180°C im Vakuum der Wasserstrahlpumpe für 4 Stunden polykondensiert. Zwischendurch wird der erstarrte Schaum zerstoßen, so daß 0,1 bis 5 mm große pulvrige Teilchen entstehen. Nach dem Abkühlen wird das Polykondensat mit 2 Liter Wasser aufgenommen. Der Rückstand abfiltriert und mit Wasser gewaschen und bei 70°C getrocknet. Die Ausbeute an Polyaspartimid beträgt 96,6 g (99,6 % d.Th.). Der K-Wert des Polynatriumaspartats beträgt 35,9.

### Beispiel 10

Die Polykondensation wird wie in Beispiel 9 beschrieben durchgeführt. Nach dem Abkühlen wird das Pulver mit 200 g Wasser versetzt und 25 %ige Natronlauge unter Kontrolle des pH-Wertes in dem Bereich von 8 bis 10 zugegeben, bis sich das Polykondensat zu einer klaren Lösung gelöst hat. Die Lösung wird am Rotationsverdampfer bei 40°C im Wasserstrahlvakuum so lange destilliert, bis kein Ammoniak mehr im Destillat nachzuweisen ist. Gegebenenfalls muß der Kolbeninhalt zwischendurch mit Wasser versetzt werden. Die resultierende Polykondensatlösung wird auf einen Feststoffgehalt von 40 Gew.-% eingestellt. Der K-Wert des Polynatriumaspartats beträgt 30,3.

## Patentansprüche

1. Verfahren zur Herstellung von Polykondensaten der Asparaginsäure durch Polykondensation von Asparaginsäure bei Temperaturen von 140 bis 300°C in Gegenwart von sauren Katalysatoren, dadurch gekennzeichnet, daß man als Katalysator partiell mit Ammoniak und/oder Aminen neutralisierte Schwefelsäure einsetzt.

2. Verfahren nach Anspruch 1, dadurch gekennzeichnet, daß das Molverhältnis von Schwefelsäure zu Ammoniak und/oder Aminen 1:0,5 bis 1:1,5 beträgt.

3. Verfahren nach Anspruch 1 oder 2, dadurch gekennzeichnet, daß die partiell neutralisierte Schwefelsäure mit 0,8 bis 1,2 mol Ammoniak und/oder Amin pro mol Schwefelsäure neutralisiert ist.

4. Verfahren nach einem der Ansprüche 1 bis 3, dadurch gekennzeichnet, daß das Molverhältnis von Schwefelsäure zu Ammoniak und/oder Aminen 1:1 beträgt.

5. Verfahren nach einem der Ansprüche 1 bis 4, dadurch gekennzeichnet, daß Ammoniumhydrogensulfat, Trimethylammonium-hydrogensulfat oder Triethylammoniumhydrogensulfat als saurer Katalysator eingesetzt wird.

6. Verfahren nach einem der Ansprüche 1 bis 5, dadurch gekennzeichnet, daß das Molverhältnis von Asparaginsäure zu der partiell neutralisierten Schwefelsäure 1:0,01 bis 1:3 beträgt.

7. Verwendung der nach den Ansprüchen 1 bis 6 erhältlichen Reaktionsgemische oder der mit Alkalimetall- oder Erdalkalimetallbasen neutralisierten Reaktionsgemische als Zusatz zu phosphatfreien oder phosphatreduzierten Wasch- und Reinigungsmitteln.

## Claims

1. A process for preparing polycondensates of aspartic acid by polycondensation of aspartic acid at from 140 to 300°C in the presence of acidic catalysts, wherein sulfuric acid which is partially neutralized with ammonia and/or amines is used as catalyst.

2. A process as claimed in claim 1, wherein the molar ratio of sulfuric acid to ammonia and/or amines is from 1:0.5 to 1:1.5.

3. A process as claimed in claim 1 or 2, wherein the partially neutralized sulfuric acid is neutralized with from 0.8 to 1.2 mol of ammonia and/or amine per mol of sulfuric acid.

4. A process as claimed in any of claims 1 to 3, wherein the molar ratio of sulfuric acid to ammonia and/or amines is 1:1.

5. A process as claimed in any of claims 1 to 4, wherein ammonium bisulfate, trimethylammonium bisulfate or triethylammonium bisulfate is used as acidic catalyst.

6. A process as claimed in any of claims 1 to 5, wherein the molar ratio of aspartic acid to the partially neutralized sulfuric acid is from 1:0.01 to 1:3.

7. The use of the reaction mixtures obtainable as claimed in claims 1 to 6, or of the reaction mixtures neutralized with alkali metal or alkaline earth metal bases, as additive to phosphate-free or reduced phosphate detergents and cleaners.

## Revendications

1. Procédé de préparation de polycondensats d'acide aspartique par polycondensation d'acide aspartique à des températures de 140-300°C en présence de catalyseurs acides, caractérisé en ce que l'on utilise en tant que catalyseur de l'acide sulfurique partiellement neutralisé avec de l'ammoniac et/ou des amines.

2. Procédé selon la revendication 1, caractérisé en ce que le rapport molaire de l'acide sulfurique à l'ammoniac et/ou aux amines s'élève de 1 : 0,5 à 1:1,5.

3. Procédé selon la revendication 1 ou 2, caractérisé en ce que l'acide sulfurique partiellement neutralisé est neutralisé avec 0,8 à 1,2 moles d'ammoniac et/ou d'amines par mole d'acide sulfurique.

4. Procédé selon l'une quelconque des revendications 1 à 3, caractérisé en ce que le rapport molaire de l'acide sulfurique à l'ammoniac et/ou aux amines s'élève à 1 : 1.

5. Procédé selon l'une quelconque des revendications 1 à 4, caractérisé en ce que l'on utilise en tant que catalyseur acide de l'hydrogénosulfate d'ammonium, de l'hydrogénosulfate de triméthylammonium ou de l'hydrogénosulfate de triéthylammonium.

6. Procédé selon l'une quelconque des revendications 1 à 5, caractérisé en ce que le rapport molaire de l'acide aspartique à l'acide sulfurique partiellement neutralisé vaut de 1 : 0,01 à 1 : 3.

7. Utilisation des mélanges réactionnels obtenus selon l'une quelconque des revendications 1 à 6, ou des mêmes mélanges réactionnels neutralisés avec des bases de métaux alcalins ou de métaux alcalino-terreux, en tant qu'additifs pour des agents de lavage et de nettoyage pauvres en phosphates ou dépourvus de phosphates.
